# EUROPÄISCHE PATENTSCHRIFT

(11) **EP 2 921 747 B1**
(45) Veröffentlichungstag und Bekanntmachung des Hinweises auf die Patenterteilung: **01.04.2020**
(21) Anmeldenummer: 15154999.5
(22) Anmeldetag: 13.02.2015
(51) Int. Cl.: F16H 63/34

(54) **Parksperrenanordnung für ein Kraftfahrzeuggetriebe**
Parking locking assembly for a motor vehicle transmission
Agencement de frein de stationnement pour boîte de vitesses de véhicule automobile

(30) Priorität: 21.03.2014 DE 102014103914
(43) Veröffentlichungstag der Anmeldung: 23.09.2015
(73) Patentinhaber: Magna PT B.V. & Co. KG, 74199 Untergruppenbach (DE)
(72) Erfinder: Kristofcsak, Andras, 51375 Leverkusen (DE)
(74) Vertreter: Rausch, Gabriele

(56) Entgegenhaltungen:
- EP-A2- 2 657 578
- CN-A- 102 135 177
- CN-A- 102 720 834
- KR-A- 20040 006 981

## Beschreibung

Die vorliegende Erfindung betrifft eine Parksperrenanordnung für ein Kraftfahrzeuggetriebe, mit einem Gehäuse und einer in Bezug auf das Gehäuse drehbar gelagerten Welle, mit einem Parksperrenrad, das drehfest an der Welle festgelegt ist und eine Parksperrenverzahnung aufweist, mit einer Parksperrenklinke, die um eine Klinkenachse verschwenkbar in Bezug auf das Gehäuse gelagert ist und einen Klinkenzahn aufweist, der zur Einrichtung einer Sperrposition in eine Zahnlücke der Parksperrenverzahnung greifen kann, und mit einem Betätigungsmechanismus, der ein Betätigungsglied aufweist, das an einem Betätigungsabschnitt der Parksperrenklinke angreift, um die Parksperrenklinke von einer Freigabeposition in die Sperrposition zu verschwenken.

Parksperrenanordnungen dieser Art sind allgemein bekannt. Diese dienen dazu, in einem Kraftfahrzeuggetriebe, insbesondere in einem automatisierten Kraftfahrzeuggetriebe, das Fahrzeug zu immobilisieren. Die Welle ist dabei vorzugsweise eine Ausgangswelle des Getriebes, die in unmittelbarer Wirkverbindung mit angetriebenen Rädern des Kraftfahrzeuges steht. In der Sperrposition wird ein Verdrehen der Welle verhindert und folglich ein Wegrollen des Fahrzeugs ausgeschlossen.

Ferner ist eine Vielzahl von Betätigungsmechanismen bekannt. In einer Ausführungsform ist an dem Gehäuse ein Ziehkeil axial verschieblich gelagert, der die Parksperrenklinke in einer Freigabeposition freigibt und zum Einrichten der Sperrposition zwischen einen Gehäuseabschnitt und einen Betätigungsabschnitt der Parksperrenklinke gezogen wird, um auf diese Weise eine in Bezug auf das Gehäuse formschlüssige Sperrposition für die Parksperrenklinke zu realisieren, bei der deren Klinkenzahn in die Parksperrenverzahnung eingreift.

Für Situationen, bei denen während dieses Betätigungsvorganges der Klinkenzahn auf einem Zahn der Parksperrenverzahnung aufliegt, kann der Betätigungsmechanismus mit einer so genannten Einrückfeder ausgestattet sein, die dann gespannt wird, so dass das Betätigungsglied (Ziehkeil) aufgrund der in der Einrückfeder gespeicherten Energie die Parksperrenklinke in die Sperrposition versetzt, sobald das Parksperrenrad sich verdreht (beispielsweise aufgrund eines Rollens des Fahrzeugs).

Weitere bekannte Betätigungsmechanismen sind in Form von Nockenelementen ausgebildet, die an einer parallel zur Klinkenachse angeordneten Welle festgelegt sind.

Der Betätigungsmechanismus kann eine Schnittstelle zu einem manuellen Ganghebel im Innenraum des Kraftfahrzeuges aufweisen, so dass bei dessen Versetzen in eine Position "P" der Parksperrenmechanismus betätigt wird. Andererseits ist es auch bekannt, den Betätigungsmechanismus mit Aktuatoren auszustatten, um ein sogenanntes "Park-by-Wire"-Parksperrensystem zu realisieren. Die Aktuatoren können hydraulische Aktuatoren sein, können jedoch auch elektromechanische Aktuatoren wie Schaltwalzen beinhalten.

Parksperrenanordnungen unterliegen in der Regel engen Vorgaben hinsichtlich des Bauraumes. Ferner ist bei der Realisierung der Parksperrenanordnung darauf zu achten, dass in der Parksperrenposition in das Gehäuse und/oder in Lager der Welle eingeleitete Kräfte nicht zu groß werden.
Aus den Dokumenten EP 2 657 578 A2 sowie CN 102720834 (A) sind jeweils Parksperrenanordnungen gemäß dem Oberbegriff des Anspruchs 1 bekannt.
Ferner offenbart das Dokument KR 1020040006981 A einen weiteren Parksperrenmechanismus, bei dem eine Parksperrenklinke mittels eines Nockens betätigt wird. Das Dokument CN 102135177 (A) offenbart einen weiteren Parksperrenmechanismus.

Vor diesem Hintergrund ist es eine Aufgabe der Erfindung, eine verbesserte Parksperrenanordnung für ein Kraftfahrzeuggetriebe anzugeben, mittels der vorzugsweise wenigstens eine der oben genannten Randbedingungen erfüllt oder verbessert wird.

Die obige Aufgabe wird bei der eingangs genannten Parksperrenanordnung dadurch gelöst, dass das Betätigungsglied als Nockenring ausgebildet ist, der konzentrisch zu der Welle angeordnet ist und der einen Nockenabschnitt aufweist, der zum Einrichten der Sperrposition an dem Betätigungsabschnitt angreift.

Durch diese Ausgestaltung ist es möglich, das Betätigungsglied auch bei engen Bauraumvorgaben kompakt in das Getriebe zu integrieren. Ferner kann eine Lagerung des Nockenringes konzentrisch zu der Welle bzw. konzentrisch zu dem Parksperrenrad konstruktiv einfach realisiert werden. Die Welle ist vorzugsweise eine Ausgangswelle des Kraftfahrzeuggetriebes.

Die Klinkenachse ist vorzugsweise parallel zu der Welle ausgerichtet.

Der Nockenring kann manuell betätigt werden oder über eine Aktuatoreinrichtung des Betätigungsmechanismus.

Die Aufgabe wird somit vollkommen gelöst.

Von besonderem Vorzug ist es, wenn der Nockenring drehbar in Bezug auf das Parksperrenrad gelagert ist.

Die drehbare Lagerung kann über ein Gleitlager oder ein Wälzlager erfolgen. Der Nockenring kann drehbar an der Welle gelagert sein oder an dem Parksperrenrad, das drehfest an der Welle festgelegt ist.

Von besonderem Vorzug ist es, wenn das Parksperrenrad einen axial vorstehenden Schulterabschnitt aufweist, an dessen Außenumfang der Nockenring gelagert ist.

Hierdurch kann das Parksperrenrad mit dem Nockenring vormontiert werden, was die Montage der Parksperrenanordnung im Getriebe vereinfacht.

Der Nockenring kann auf verschiedene Art und Weise betätigt werden, beispielsweise durch Eingriff mit einer Verzahnung einer Schaltwalze oder durch ein anderes rotatorisches Betätigungssystem. Bevorzugt ist der Nockenring jedoch über eine Stange, insbesondere in Form einer Schubstange, betätigbar.

Dabei ist es bevorzugt, wenn ein erstes Ende einer solchen Stange des Betätigungsmechanismus gelenkig mit dem Nockenring verbunden ist.

Durch diese Maßnahme können die über die Stange eingeleiteten Kräfte unabhängig von einer jeweiligen Drehposition des Nockenringes in Bezug auf eine Achse der Stange effizient eingeleitet werden. Die Stange ist, wie gesagt, vorzugsweise eine Schubstange, die sowohl Schubkräfte als auch Zugkräfte übertragen kann.

Von besonderem Vorzug ist es, wenn die Stange mit dem Nockenabschnitt verbunden ist.

Der Nockenabschnitt ist vorzugsweise ein radial nach außen vortretender Abschnitt. Durch die gelenkige Verbindung mit dem Nockenabschnitt kann der Nockenring daher vergleichsweise einfach verdreht werden (aufgrund des radialen Abstandes zwischen der Drehachse des Nockenringes und dem Nockenabschnitt). Wenn der Nockenring über ein Wälzlager wie ein Nadellager drehbar gelagert ist und/oder wenn ein Abstand zwischen einer Sperrfläche des Nockenabschnittes und der gelenkigen Anbindung der Stange klein ist, kann das Verdrehen aufgrund vergleichsweise geringer Kräfte erfolgen. Hierbei kann der Nockenring im Bereich des Nockenabschnittes wie ein Ziehkeil wirken, dessen eine Seite reibungsfrei ist.

Gemäß einer weiteren bevorzugten Ausführungsform ist ein zweites Ende der Stange gelenkig mit einem Betätigungshebel des Betätigungsmechanismus verbunden.

Der Betätigungshebel kann beispielsweise mit einer Schnittstelle verbunden sein, über die ein Seilzug oder eine sonstige mechanische Kopplung mit einem Ganghebel in einem Kraftfahrzeug einrichtbar ist.

Der Betätigungshebel kann jedoch auch über einen Aktuator verdrehbar sein.

Durch die Maßnahme, den Betätigungshebel über eine Stange mit dem Nockenring zu verbinden, kann der Betätigungshebel an einer räumlich günstigen Stelle innerhalb des Kraftfahrzeuges angeordnet werden, insbesondere in einem räumlich günstigen Bereich unabhängig von der Position des Parksperrenrades angeordnet werden.

Die Stange kann eine einteilige Stange sein, ist jedoch vorzugsweise eine zweiteilige Stange, wobei die zwei Stangenteile über eine Einrückfeder gekoppelt sind, um, wie eingangs beschrieben, ein Betätigen der Parksperrenanordnung auch dann zu ermöglichen, wenn eine Situation vorliegt, bei der der Klinkenzahn auf einem Zahn der Parksperrenverzahnung aufliegt.

Insgesamt ist es ferner vorteilhaft, wenn der Nockenring mit einem Arretierglied verbunden ist, das dazu ausgebildet ist, die Parksperrenklinke in einer Freigabedrehstellung des Nockenrings in der Freigabeposition zu arretieren.

Generell ist es möglich, die Parksperrenklinke mittels einer Halteeinrichtung in Form einer Feder in der Freigabeposition zu halten. Durch das Bereitstellen eines Arretiergliedes ist es jedoch möglich, die Parksperrenklinke in der Freigabeposition formschlüssig zu arretieren. Hierzu kann das Arretierglied einen Arretierabschnitt aufweisen, der an einem Halteabschnitt der Parksperrenklinke angreift. Der Halteabschnitt und der Betätigungsabschnitt können in Umfangsrichtung versetzt zueinander angeordnet sein, so dass bei einer Verdrehung des Nockenringes gewährleistet ist, dass das Arretierglied die Parksperrenklinke freigibt, bevor der Nockenabschnitt des Nockenringes die Parksperrenklinke in die Sperrposition verschwenkt.

An der Parksperrenklinke ist vorzugsweise ein Arretierstift vorgesehen, der in axialer Richtung vorsteht und an dem das Arretierglied in der Freigabedrehstellung angreift. Der Arretierstift bildet hierbei einen Halteabschnitt. Ferner ist es bevorzugt, wenn der Nockenring aus einem massiven Material hergestellt ist, insbesondere aus Metall. Das Arretierglied kann dabei einstückig mit dem Nockenring ausgebildet sein. Vorzugsweise ist das Arretierglied jedoch durch ein separates Bauteil realisiert, das in Leichtbauweise ausgeführt sein kann, beispielsweise als Blechteil oder dergleichen. Denn von dem Arretierglied sind keine hohen Kräfte zu übertragen.

Für diesen Fall ist es vorteilhaft, wenn das Arretierglied einen Betätigungsabschnitt aufweist, der in axialer Richtung zwischen dem Nockenring und dem Parksperrenrad angeordnet ist, und einen sich radial hiervon erstreckenden Arretierabschnitt aufweist. Der Betätigungsabschnitt kann dabei in Umfangsrichtung formschlüssig mit dem Nockenring verbunden sein. Zwischen dem Betätigungsabschnitt und dem Parksperrenrad kann ein Axiallager ausgebildet sein. Vorzugsweise ist der Betätigungsabschnitt jedoch auf sonstige Art und Weise verdrehbar in Bezug auf das Parksperrenrad gelagert, beispielsweise durch einen geeigneten Abstand zu dem Parksperrenrad.

Der Betätigungsabschnitt kann vorzugsweise ring- oder ringabschnittförmig sein. Der Arretierabschnitt kann sich nockenartig von einem solchen Ringabschnitt erstrecken.

Ferner ist es insgesamt vorteilhaft, wenn die Parksperrenklinke einen ersten Klinkenabschnitt aufweist, an dem der Klinkenzahn ausgebildet ist, und einen zweiten Klinkenabschnitt aufweist, an dem der Betätigungsabschnitt ausgebildet ist, wobei der erste und der zweite Klinkenabschnitt in axialer Richtung versetzt sind.

Der erste und der zweite Klinkenabschnitt können beispielsweise über eine Kröpfung der Parksperrenklinke miteinander verbunden sein.

Der erste Klinkenabschnitt ist vorzugsweise axial mit dem Parksperrenrad ausgerichtet, so dass der Klinkenzahn auf konstruktiv einfache Art und Weise in die Parksperrenverzahnung eingreifen kann. Zudem können bei dieser Ausgestaltung hohe Kräfte über die Parksperrenklinke übertragen werden.

Der zweite Klinkenabschnitt ist in axialer Richtung vorzugsweise ausgerichtet mit dem Nockenring, so dass dessen Nockenabschnitt auf einfache Art und Weise an dem Betätigungsabschnitt angreifen kann.

Gemäß einer weiteren bevorzugten Ausführungsform, ist die Parksperrenklinke als zweiseitiger Hebel ausgebildet, der einen ersten Hebelarm aufweist, an dem der Klinkenzahn ausgebildet ist, und einen zweiten Hebelarm aufweist, an dem der Betätigungsabschnitt ausgebildet ist.

Während Parksperrenklinken herkömmlicher Bauweise generell als einseitige Hebel ausgebildet sind, ermöglicht die Ausgestaltung der Parksperrenklinke als zweiseitiger Hebel eine Reihe von Vorteilen. Beispielsweise ist es hierbei auf einfache Weise möglich, dass der Nockenabschnitt an einem in radialer Richtung zu dem Parksperrenrad hin weisenden Betätigungsabschnitt der Parksperrenklinke angreifen kann, so dass der Nockenhebel den zweiten Hebelarm radial nach außen drückt, was zu einer Bewegung des ersten Hebelarms in radialer Richtung hin zu dem Parksperrenrad führt. Durch geeignete Auswahl der Längen der Hebelarme können zudem Kräfte geeignet übertragen werden. Auch ermöglicht dies, den Nockenabschnitt bzw. dessen gelenkige Anbindung an eine Stange oder dergleichen an einer räumlich optimierten Position zu realisieren.

Ferner ist es bei dieser Ausgestaltung vorteilhaft, wenn die Welle über einen Radsatz mit einem Drehglied des Kraftfahrzeuggetriebes in Wirkverbindung steht, wobei die Parksperrenklinke so in Bezug auf das Gehäuse und die Welle gelagert ist, dass ein Eingriff zwischen dem Klinkenzahn und der Parksperrenverzahnung im Bereich einer Verbindungslinie zwischen einer Achse der Welle und einer Achse des Drehgliedes angeordnet ist.

Das Drehglied kann insbesondere ein Antriebsglied eines Differentials sein.

Unter einer Anordnung im Bereich einer solchen Verbindungslinie soll vorliegend verstanden werden, dass der Eingriff zwischen dem Klinkenzahn und der Parksperrenverbindung in einem Winkelbereich von ± 50° in Bezug auf die Verbindungslinie angeordnet ist, insbesondere in einem Bereich von ± 30°, vorzugsweise in einem Bereich von ± 20°. Besonders bevorzugt ist es, wenn der Eingriff zwischen dem Klinkenzahn und der Parksperrenverzahnung direkt auf der Verbindungslinie zwischen den Achsen liegt.

Der Grund für diese bevorzugte Anordnung liegt darin, dass von dem Drehglied aufgrund der auf die Antriebsräder wirkenden Kräfte in der Regel ein vergleichsweise hohes Moment auf das Parksperrenrad ausgeübt wird. Anderseits wirken Umfangskräfte auf das Parksperrenrad, die sich bei einer ungünstigen Anordnung des Eingriffs zwischen Klinkenzahn und Parksperrenverbindung zu den von dem Differential ausgeübten Kräften hinzuaddieren können.

Bei einer Anordnung des Eingriffs zwischen Klinkenzahn und Parksperrenverzahnung im Bereich der Verbindungslinie können diese Kräfte jedoch in im Wesentlichen entgegengesetzter Richtung wirken, so dass Kräfte, die von dem Parksperrenrad auf die Welle und möglicherweise auf ein Lager der Welle ausgeübt werden, verringert werden können.

Die Ausgestaltung der Parksperrenklinke als zweiseitiger Hebel ermöglicht zudem, dass eine derartige Anordnung des Eingriffs zwischen Klinkenzahn und Parksperrenverzahnung auf konstruktiv günstige Art und Weise realisiert werden kann. Denn der Ort des Betätigungsabschnittes und der Ort des Eingriffs können hierbei in Umfangsrichtung vergleichsweise weit voneinander beabstandet sein, so dass trotz eines solchen bevorzugten Eingriffs zwischen Parksperrenklinke und Parksperrenverzahnung eine konstruktiv günstige Betätigung der Parksperrenanordnung realisierbar ist.

Das Arretierglied kann ferner einen Führungsabschnitt aufweisen, der in der Freigabeposition auf den Betätigungsabschnitt an dem zweiten Hebelarm wirkt. Hierdurch kann zum einen erreicht werden, dass der Nockenabschnitt in Umfangsrichtung vergleichsweise kurz ausgebildet werden kann (beispielsweise über einen Winkelbereich < 30°). Ferner kann erreicht werden, dass beide Seiten des zweiseitigen Parksperrenklinken-Hebels in radialer Richtung fixiert werden, so dass Klappergeräusche oder dergleichen vermieden werden können.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen, welche durch die nachfolgenden Ansprüche definiert wird.

Ausführungsbeispiele der Erfindung sind in der Zeichnung dargestellt und werden in der nachfolgenden Beschreibung näher erläutert. Es zeigen:
- Fig. 1: eine schematische Darstellung eines Antriebsstranges eines Kraftfahrzeuges mit einem Kraftfahrzeuggetriebe, das mit einer erfindungsgemäßen Parksperrenanordnung ausgestattet sein kann;
- Fig. 2: eine schematische Axialansicht auf einen Abschnitt des Kraftfahrzeuggetriebes und einer daran ausgebildeten Parksperrenanordnung;
- Fig. 3: eine perspektivische Ansicht einer weiteren Ausführungsform einer erfindungsgemäßen Parksperrenanordnung;
- Fig. 4: eine axiale Draufsicht auf die Parksperrenanordnung der Fig. 3 in einer Sperrposition;
- Fig. 5: eine der Fig. 4 vergleichbare Darstellung der Parksperrenanordnung in einer ersten Freigabeposition, bei der ein zweiter Hebelarm sich an einem Teil des Nockenabschnitts abstützt;
- Fig. 6: eine der Fig. 5 vergleichbare Darstellung der Parksperrenanordnung in einer weiteren Freigabeposition, bei der sich ein zweiter Hebelarm an einem Führungsabschnitt eines Arretiergliedes abstützt;
- Fig. 7: eine axiale Draufsicht auf die Parksperrenanordnung der Fig. 3 bis 6 von der entgegengesetzten axialen Seite;
- Fig. 8: eine Schnittansicht entlang der Linie VIII-VIII der Fig. 7;
- Fig. 9: eine radiale Draufsicht auf die Parksperrenanordnung der Fig. 3 bis 8;
- Fig. 10: eine schematische Darstellung der Lage eines Eingriffs zwischen einem Klinkenzahn und einer Parksperrenverzahnung in Bezug auf Achsen einer Welle und eines hiermit über einen Radsatz gekoppelten Differentials; und
- Fig. 11: eine vektorielle Darstellung der bei dem Eingriff der Fig. 10 wirkenden Kräfte.

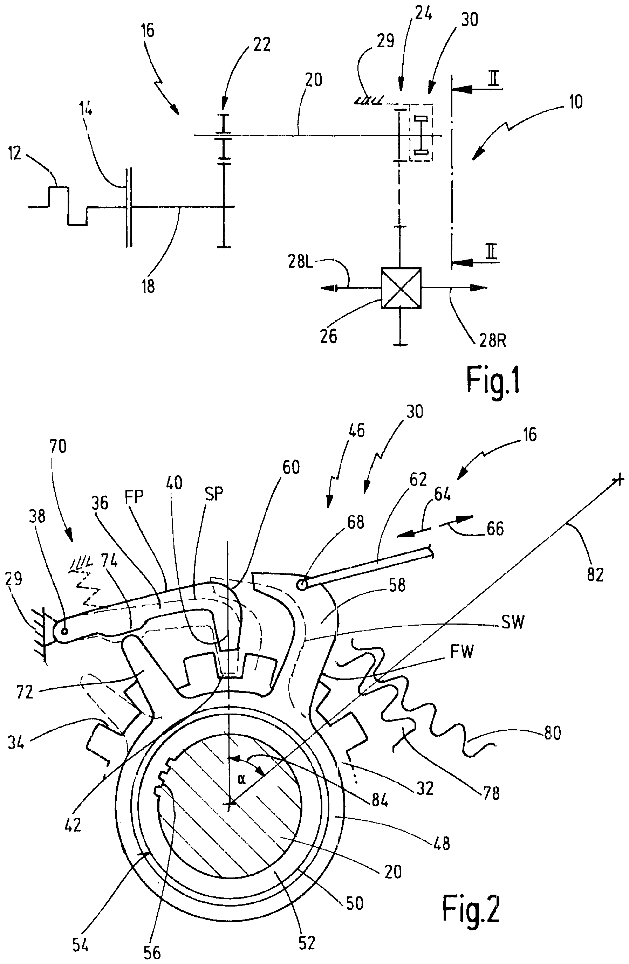

In Fig. 1 ist ein Antriebsstrang für ein Kraftfahrzeug schematisch dargestellt und mit dem Bezugszeichen 10 bezeichnet. Der Antriebsstrang 10 weist einen Antriebsmotor 12 wie einen Verbrennungsmotor oder eine Hybrid-Antriebseinheit auf. Ferner beinhaltet der Antriebsstrang 10 eine Reibkupplungsanordnung, die eingangsseitig mit dem Antriebsmotor 12 verbunden ist und die ausgangsseitig mit einem Stufengetriebe 16 verbunden ist. Das Stufengetriebe 16 weist eine Eingangswellenanordnung 18 auf, die mit einem Ausgangsglied oder Ausgangsgliedern der Kupplungsanordnung 14 verbunden ist. Ferner weist das Stufengetriebe 16 eine Ausgangswelle 20 auf. Die Eingangswelle 18 ist beispielhaft über einen ersten Radsatz 22 mit der Ausgangswelle 20 verbunden, wobei der erste Radsatz 22 beispielsweise ein schaltbarer Radsatz sein kann. Die Ausgangswelle 20 ist über einen zweiten Radsatz 24 mit einem Differential 26 verbunden, wobei der zweite Radsatz 24 nicht schaltbar, das heißt als Konstanten-Radsatz ausgebildet ist. Das Differential 26 ist dazu ausgelegt, Antriebsleistung auf angetriebene Räder 28L, 28R zu verteilen. Das Stufengetriebe 16 kann als automatisiertes Schaltgetriebe, als manuelles Stufengetriebe oder als Doppelkupplungsgetriebe ausgebildet sein. Ferner kann das Stufengetriebe 16 für den Einbau in Längsbauweise oder, wie bevorzugt dargestellt, für den Einbau front-quer im Kraftfahrzeug ausgelegt sein. Das Stufengetriebe 16 weist ferner ein schematisch angedeutetes Gehäuse 29 auf.

In dem Stufengetriebe 16 ist eine Parksperrenanordnung 30 angeordnet, die der Ausgangswelle 20 zugeordnet ist und sich an dem Gehäuse 29 abstützen kann, um ein mit dem Antriebsstrang 10 ausgestattetes Kraftfahrzeug zu immobilisieren.

Fig. 2 zeigt in schematischer Darstellung eine Ansicht II-II der Fig. 1.

Demgemäß weist die Parksperrenanordnung 30 ein Parksperrenrad 32 auf, das drehfest mit der Ausgangswelle 20 verbunden ist. An einem Außenumfang des Parksperrenrades 32 ist eine Parksperrenverzahnung 34 ausgebildet. Die Parksperrenanordnung 30 beinhaltet ferner eine Parksperrenklinke 36, die um eine Klinkenachse 38 verschwenkbar ausgebildet ist. Die Klinkenachse 38 ist gehäusefest und ist vorzugsweise parallel zu der Welle 20 ausgerichtet.

An der Parksperrenklinke 36 ist ein Klinkenzahn 40 ausgebildet, der zur Einrichtung einer Sperrposition SP der Parksperrenanordnung 30 in eine Zahnlücke 42 der Parksperrenverzahnung 34 greifen kann.

Zur Betätigung der Parksperrenklinke 36 ist ein Betätigungsmechanismus 46 vorgesehen. Der Betätigungsmechanismus 46 beinhaltet einen Nockenring 48, der über ein Drehlager 50 verdrehbar in Bezug auf die Welle 20 bzw. das Parksperrenrad 32, und konzentrisch hierzu, gelagert ist. Insbesondere kann der Nockenring 48 über das Drehlager 50 an einem Außenumfang 54 eines Schulterabschnittes 52 gelagert sein, der Teil des Parksperrenrades 32 ist und sich axial gegenüber einem Hauptabschnitt des Parksperrenrades 32 erstreckt.

Bei 56 ist ferner eine schematisch angedeutete Steckverzahnung gezeigt, mittels der das Parksperrenrad 32 drehfest mit der Welle 20 verbunden ist.

Der Nockenring 48 weist einen Nockenabschnitt 58 auf, der radial gegenüber einem Hauptabschnitt des Nockenrings 48 vorsteht, und zwar vorzugsweise über die Parksperrenverzahnung 34 hinaus. Die Parksperrenklinke 36 beinhaltet einen Betätigungsabschnitt 60, an dem der Nockenabschnitt 58 angreifen kann. Vorliegend ist der Betätigungsabschnitt 60 im Bereich einer radialen Außenseite der Parksperrenklinke 36 ausgebildet. Der Nockenabschnitt 58 ist hakenförmig ausgebildet und gibt in der in durchgezogenen Linien gezeigten Freigabeposition FP der Parksperrenklinke 36 die Parksperrenklinke 36 frei. Die entsprechende Freigabedrehstellung des Nockenrings 48 bzw. das Nockenabschnittes 58 ist in Fig. 2 mit FW gezeigt.

Wenn der Nockenring 48 aus der in Fig. 2 in durchgezogenen Linien gezeigten Position entgegen des Uhrzeigersinnes auf die Parksperrenklinke 36 zu bewegt wird, ergreift der Nockenabschnitt 58 den Betätigungsabschnitt 60 und verschwenkt die Parksperrenklinke 36 radial auf das Parksperrenrad 32 zu, so dass der Klinkenzahn 40 in eine Zahnlücke 42 eingreift. Der Nockenabschnitt 58 übergreift dabei die Parksperrenklinke 36, so dass diese vorzugsweise formschlüssig in dieser Sperrposition SP gehalten wird. Dies ist in Fig. 2 mit gestrichelten Linien dargestellt. Die entsprechende Sperrdrehstellung SW des Nockenrings 48 bzw. des Nockenabschnittes 58 ist ebenfalls gestrichelt dargestellt.

Der Betätigungsmechanismus 46 beinhaltet ferner eine Betätigungsstange 62, die sich vorzugsweise etwa tangential zu dem Parksperrenrad 32 erstreckt und in einer Sperrichtung 64 und in einer entgegengesetzten Freigaberichtung 66 bewegbar ist. Die Betätigungsstange 62 ist über eine Gelenkverbindung 68 mit dem Nockenring 48 verbunden, vorzugsweise mit dem Nockenabschnitt 58, wie dargestellt. Die Betätigungsstange 62 ist vorzugsweise als kombinierte Schub- und Zugstange ausgebildet, so dass auf den Nockenring 48 sowohl Kräfte zum Versetzen des Nockenrings 48 in die Sperrdrehstellung SW als auch Kräfte in umgekehrter Richtung zum Bewegen des Nockenrings 48 in die Freigabedrehstellung FW ausgeübt werden können. Die Betätigungsstange 62 ist mit weiteren Elementen des Betätigungsmechanismus 46 verbindbar, beispielsweise mit einem Betätigungshebel. Die weiteren Elemente des Betätigungsmechanismus 46 können manuelle Betätigunselemente sein, die beispielsweise mit einem manuellen Gangwahlhebel des Kraftfahrzeuges gekoppelt sind, können jedoch auch Aktuatorelemente sein, die ein "Park-by-Wire"-Parksperrensystem einrichten.

Um die Parksperrenklinke 36 in der Freigabeposition FP zu halten, kann eine Halteeinrichtung 70 vorgesehen sein, wie sie in Fig. 2 schematisch durch eine Zugfeder angedeutet ist. Vorliegend wird die Parksperrenklinke 36 jedoch in der Freigabeposition FP mittels eines Arretiergliedes 72 formschlüssig gehalten, also in der Freigabeposition FP arretiert. Das Arretierglied 72 ist mit dem Nockenring 48 verbunden und greift beispielsweise an einer radialen Innenseite der Parksperrenklinke 36 an, insbesondere an einem Halteabschnitt 74 der Parksperrenklinke 36. In der Freigabedrehstellung FW hält das Arretierglied 72 die Parksperrenklinke 36 in der Freigabeposition FP, so dass ein unbeabsichtigtes Einrasten des Klinkenzahnes 40 in eine Zahnlücke 42 sicher vermieden werden kann. Die in Fig. 2 schematisch angedeutete Feder kann für diesen Fall eine Druckfeder sein, die die Parksperrenklinke 36 in radialer Richtung gegen das Arretierglied 72 drückt. Beim Verdrehen des Nockenringes 48 in die Sperrdrehstellung SW gibt das Arretierglied 72 den Halteabschnitt 74 frei, so dass der Nockenabschnitt 58 die Parksperrenklinke 36 in die Freigabeposition FP drücken kann.

Das Zusammenwirken von Arretierglied 72 und Halteabschnitt 74 hat ebenfalls den Charakter eines Nockeneingriffs, so dass bei einem Zurückdrehen des Nockenringes 48 in die Freigabedrehstellung FW das Arretierglied 72 die Parksperrenklinke 36 zwangsweise aus der Sperrposition SP in die Freigabeposition FP überführt.

In Fig. 2 ist ferner dargestellt, dass ein Abtriebszahnrad 78 koaxial zu der Ausgangswelle 20 angeordnet ist. Das Abtriebszahnrad 78 ist vorzugsweise drehfest mit der Ausgangswelle 20 verbunden und steht in Eingriff mit einem Differentialantriebsrad 80, das einen Differentialkorb des Differentials 26 antreibt.

Eine Verbindungslinie zwischen den Achsen des Abtriebszahnrades 78 und des Differentialantriebsrades 80 ist in Fig. 2 bei 82 dargestellt.

Aus Gründen, die nachstehend noch erläutert werden, befindet sich der Bereich des Eingriffs des Klinkenzahns 48 in die Parksperrenverzahnung 34 in einem Bereich dieser Verbindungslinie 82, das heißt in einem Bereich von ± 50° bezogen auf die Verbindungslinie 82, vorzugsweise in einem Bereich von ± 30°, insbesondere in einem Bereich von ± 15° in Bezug auf die Verbindungslinie 82.

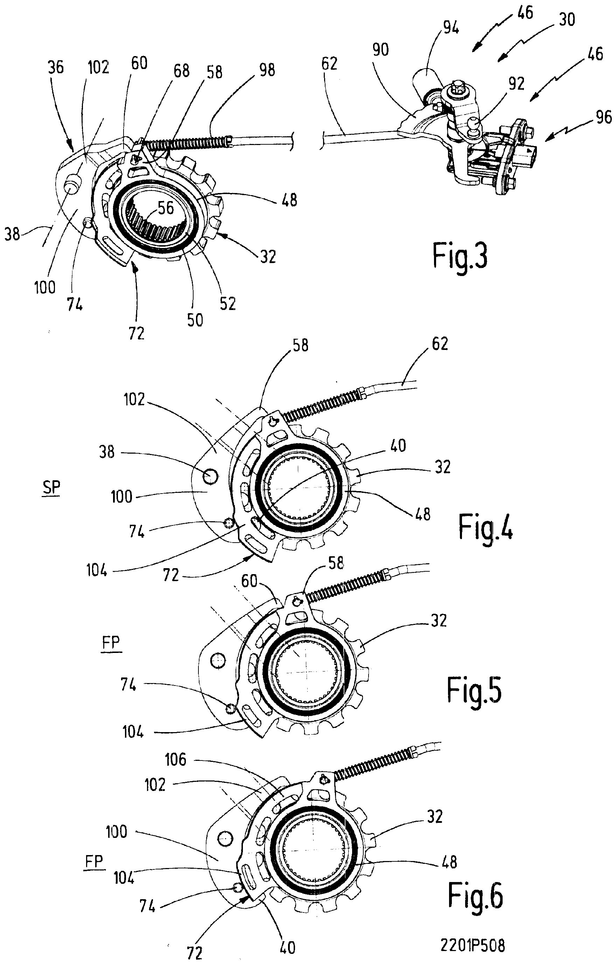

In den nachfolgenden Fig. 3 bis 9 ist eine weitere Ausführungsform einer Parksperrenanordnung 30 gezeigt, die hinsichtlich Aufbau und Funktionsweise generell der Parksperrenanordnung 30 der Fig. 2 entspricht. Gleiche Elemente sind daher durch gleiche Bezugszeichen gekennzeichnet. Im Folgenden werden im Wesentlichen die Unterschiede erläutert.

In Fig. 3 ist zunächst ein weiterer Abschnitt des Betätigungsmechanismus gezeigt, nämlich jener Abschnitt, der mit einem zweiten Ende der Betätigungsstange 62 verbunden ist. Dieser Abschnitt beinhaltet einen Betätigungshebel 90, der um eine gehäusefeste Achse verschwenkbar ist. Der Betätigungshebel 90 ist mit einer Schnittstelle 92 verbunden, an die zum Beispiel ein Schaltkabel angeschlossen werden kann, das mit einem Gangschalthebel bzw. Wählhebel im Kraftfahrzeuginnenraum verbunden ist. Ferner weist dieser Abschnitt eine Rastbuche 94 auf, mittels der der Betätigungshebel 90 in verschiedenen Raststellungen (entsprechend D, N, R, P) gehalten werden kann. Die Rastbuchse 94 greift dabei an einem Außenumfangsabschnitt des Betätigungshebels 90 an. Schließlich beinhaltet dieser Abschnitt vorzugsweise eine Sensoranordnung 96, mittels der die jeweilige Drehstellung des Betätigungshebels 90 erfassbar ist. Der Betätigungshebel 90 ist über eine nicht näher gezeigte gelenkige Verbindung mit der Betätigungsstange 62 verbunden.

Die Betätigungsstange 62 selbst ist bei dieser Ausführungsform zweiteilig ausgebildet, wobei zwischen diesen koaxial zueinander verschiebbaren Teilen (nicht näher dargestellt) eine Einrückfeder 98 wirkt, die gespannt wird, wenn die Parksperrenanordnung 30 in die Sperrposition SP bewegt wird, während der Klinkenzahn 40 auf einem Zahn der Parksperrenverzahnung 34 aufliegt.

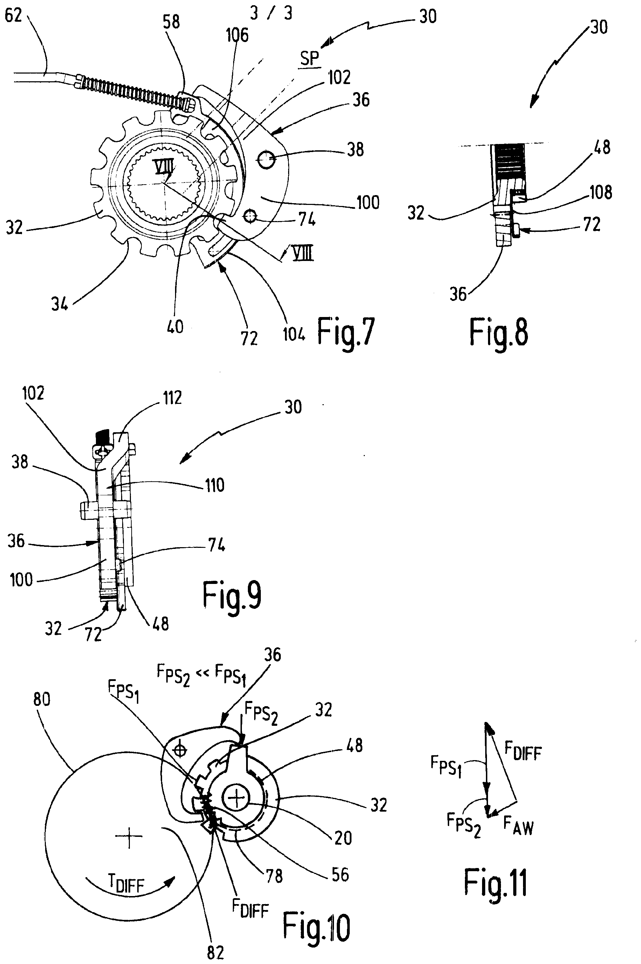

Ferner ist die Parksperrenklinke 36 bei dieser Ausführungsform als zweiseitiger Hebel mit einem ersten Hebelarm 100 und einem zweiten Hebelarm 102 ausgebildet. Der erste Hebelarm 100 ist mit dem Klinkenzahn 40 verbunden. Ferner ist an dem ersten Hebelarm 100 ein axial vorstehender Stift 74 ausgebildet, der einen Halteabschnitt 74 zum Arretieren der Parksperrenklinke 36 in der Freigabeposition FP darstellt. Der Betätigungsabschnitt 60 der Parksperrenklinke 36 ist bei dieser Ausführungsform an dem zweiten Hebelarm 102 ausgebildet, und zwar an einem radial innenliegenden Abschnitt des zweiten Hebelarms 102. Der Nockenabschnitt 58 des Nockenrings 48 ist so ausgebildet, dass er zum Überführen der Parksperrenklinke 36 von der Freigabeposition FP (siehe Fig. 5 und 6) in die Sperrposition SP (siehe Fig. 4 und Fig. 7) den zweiten Hebelarm 102 radial nach außen drückt, wodurch der erste Hebelarm 100 in radialer Richtung nach innen auf die Parksperrenverzahnung 34 zu bewegt wird.

Der Nockenring 48 ist über ein Drehlager 50 an einem Außenumfang eines Schulterabschnittes des Parksperrenrades 32 drehbar gelagert und weist den radial vorstehenden Nockenabschnitt 58 auf. Der Nockenring 48 ist dabei einstückig aus einem massiven Material hergestellt, insbesondere aus Metall. Das Arretierglied 72 ist bei dieser Ausführungsform als separates Bauteil in Leichtbauweise, insbesondere als Blechbauteil, ausgebildet und weist einen Arretierabschnitt 104 auf, der nockenartig an dem Halteabschnitt in Form eines Stiftes 74 angreift (siehe insbesondere Fig. 5 und 6), um die Parksperrenklinke 36 in der Freigabeposition FP zu arretieren. Das Arretierglied 72 beinhaltet ferner einen Führungsabschnitt 106, der sich zwischen dem Arretierabschnitt 104 und dem Nockenabschnitt 58 erstreckt und mit einem Führungsabschnitt des Nockenabschnittes 58 in Umfangsrichtung tangential ausgerichtet ist. Wie es in Fig. 5 gezeigt ist, gleitet der Betätigungsabschnitt 60 beim Überführen von der Sperrposition SP (Fig. 4) in die Freigabeposition FP von dem Nockenabschnitt 58 herunter auf einen solchen Führungsabschnitt des Nockenabschnittes 58, von wo aus er bei einem weiteren Verdrehen des Nockenrings 48 auf den Führungsabschnitt 106 des Arretiergliedes 72 geleitet wird. Die Parksperrenklinke 36 in Form des zweiseitigen Hebels wird folglich in der Freigabeposition FP an beiden Hebelarmen 100, 102 abgestützt, und zwar in radialer Richtung mittels des Arretiergliedes 72.

Beim Zurückdrehen in die Sperrposition SP wird der Betätigungsabschnitt 60 dann zunächst auf den Führungsabschnitt des Nockenabschnittes 58 geleitet (siehe Fig. 5) und von dem Nockenabschnitt 58 dann radial nach außen gedrückt, in die in Fig. 4 gezeigte Sperrposition SP.

Fig. 8 zeigt, dass das Arretierglied 72 einen Betätigungsabschnitt 108 aufweist, der in radialer Richtung zwischen dem Nockenring 48 und dem Parksperrenrad 32 angeordnet sein kann und vorzugsweise ringförmig oder ringabschnittförmig ausgebildet ist. Der Befestigungsabschnitt 108 ist drehfest mit dem Nockenring 48 verbunden und ist verdrehbar gegenüber dem Parksperrenrad 32 ausgebildet.

Wie es in Fig. 9 gezeigt ist, weist die Parksperrenklinke 36 einen ersten Klinkenabschnitt 110 auf, der in axialer Richtung mit dem Parksperrenrad 32 ausgerichtet ist. An diesem ersten Klinkenabschnitt 110 ist der Klinkenzahn 40 ausgebildet. Der erste Klinkenabschnitt 110 erstreckt sich über den ersten Hebelarm 100 und über einen Abschnitt des zweiten Hebelarms 102. Im Bereich des zweiten Hebelarms 102 beinhaltet die Parksperrenklinke 36 ferner einen zweiten Klinkenabschnitt 112, der in axialer Richtung gegenüber dem ersten Klinkenabschnitt 110 versetzt ist. Der zweite Klinkenabschnitt 112 ist mit dem ersten Klinkenabschnitt 110 über einen gekröpften Abschnitt bzw. eine Kröpfung verbunden. Der zweite Klinkenabschnitt 112 ist axial mit dem Nockenring 48 ausgerichtet.

In den Fig. 10 und 11 ist ferner in schematischer Form gezeigt, welche Kräfte auf das Parksperrenrad 32 und folglich auf die starr hiermit verbundene Welle 20 wirken, und folglich auf deren Drehlager bzw. Wellenlager. Zum einen ergibt sich aufgrund von Momenten T_{DIFF}, die über das Differential und das Differentialantriebsrad 80 eingeleitet werden (beispielsweise an einem Hangabschnitt, an dem das Fahrzeug steht), eine tangentiale Kraft F_{DIFF} auf den Punkt des Eingriffs zwischen den Verzahnungen der Zahnräder 78, 80, über die ein Moment auf die Welle 20 ausgeübt wird, das in Abhängigkeit von der Hangneigung, an der das Fahrzeug steht, in einer bestimmten Richtung wirkt, wie es in Fig. 10 und 11 dargestellt ist.

Ferner wirken über die Parksperrenanordnung 30 Kräfte auf die Welle 20, die diese Kraft F_{DIFF} vorzugsweise zumindest teilweise ausgleichen, und zwar eine Kraft F_{PS1} im Bereich des Eingriffs der Klinke in die Parksperrenverzahnung 34 und eine Kraft F_{PS2} zwischen dem Betätigungsabschnitt 60 und dem Nockenabschnitt 58. Die Kraft F_{PS2} ist in der Regel deutlich kleiner als die Kraft F_{PS1}.

Die resultierenden Kräfte ergeben sich aus Fig. 11, woraus eine Kraft F_{AW} resultiert, die auf die Welle 20 und folglich auf die Wellenlager wirkt. Sofern, wie dargestellt, der Bereich des Eingriffs zwischen dem Klinkenzahn 40 und der Parksperrenverzahnung 34 im Bereich der Verbindungslinie 82 liegt, ist die Kraft F_{AW} vorzugsweise sehr klein, so dass die Belastung der Wellenlager vergleichsweise gering ist.

## Patentansprüche

1. Parksperrenanordnung (30) für ein Kraftfahrzeuggetriebe (16), mit
- einem Gehäuse (29) und einer in Bezug auf das Gehäuse (29) drehbar gelagerten Welle (20),
- einem Parksperrenrad (32), das drehfest an der Welle (20) festgelegt ist und eine Parksperrenverzahnung (34) aufweist,
- einer Parksperrenklinke (36), die um eine Klinkenachse (38) verschwenkbar in Bezug auf das Gehäuse (29) gelagert ist und einen Klinkenzahn (40) aufweist, der zur Einrichtung einer Sperrposition (SP) in eine Zahnlücke (42) der Parksperrenverzahnung (34) greifen kann,
- einem Betätigungsmechanismus (46), der ein Betätigungsglied (48) aufweist, das an einem Betätigungsabschnitt (60) der Parksperrenklinke (36) angreift, um die Parksperrenklinke (36) von einer Freigabeposition (FP) in die Sperrposition (SP) zu verschwenken,
**dadurch gekennzeichnet, dass**
das Betätigungsglied (48) als Nockenring (48) ausgebildet ist, der konzentrisch zu der Welle (20) angeordnet ist und der einen Nockenabschnitt (58) aufweist, der zum Einrichten der Sperrposition (SP) an dem Betätigungsabschnitt (60) angreift.

2. Parksperrenanordnung (30) nach Anspruch 1, **dadurch gekennzeichnet, dass** der Nockenring (48) drehbar in Bezug auf das Parksperrenrad (32) gelagert ist.

3. Parksperrenanordnung nach Anspruch 1 oder 2, **dadurch gekennzeichnet, dass** das Parksperrenrad (32) einen axial vorstehenden Schulterabschnitt (52) aufweist, an dessen Außenumfang (54) der Nockenring (48) gelagert ist.

4. Parksperrenanordnung nach einem der Ansprüche 1 - 3, **dadurch gekennzeichnet, dass** ein erstes Ende einer Stange (62) des Betätigungsmechanismus (46) gelenkig mit dem Nockenring (48) verbunden ist.

5. Parksperrenanordnung nach Anspruch 4, **dadurch gekennzeichnet, dass** ein zweites Ende der Stange (62) gelenkig mit einem Betätigungshebel (90) des Betätigungsmechanismus (46) verbunden ist.

6. Parksperrenanordnung nach einem der Ansprüche 1 - 5, **dadurch gekennzeichnet, dass** der Nockenring (48) mit einem Arretierglied (72) verbunden ist, das dazu ausgebildet ist, die Parksperrenklinke (36) in einer Freigabedrehstellung (FW) des Nockenrings (48) in der Freigabeposition (FP) zu arretieren.

7. Parksperrenanordnung nach Anspruch 6, **dadurch gekennzeichnet, dass** das Arretierglied (72) einen Befestigungsabschnitt (108) aufweist, der in axialer Richtung zwischen dem Nockenring (48) und dem Parksperrenrad (32) angeordnet ist, und einen sich radial hiervon erstreckenden Arretierabschnitt (104) aufweist.

8. Parksperrenanordnung nach einem der Ansprüche 1 - 7, **dadurch gekennzeichnet, dass** die Parksperrenklinke (36) einen ersten Klinkenabschnitt (110) aufweist, an dem der Klinkenzahn (40) ausgebildet ist, und einen zweiten Klinkenabschnitt (112) aufweist, an dem der Betätigungsabschnitt (60) ausgebildet ist, wobei der erste und der zweite Klinkenabschnitt (110, 112) in axialer Richtung versetzt sind.

9. Parksperrenanordnung nach einem der Ansprüche 1 - 8, **dadurch gekennzeichnet, dass** die Parksperrenklinke (36) als zweiseitiger Hebel ausgebildet ist, der einen ersten Hebelarm (100) aufweist, an dem der Klinkenzahn (40) ausgebildet ist, und einen zweiten Hebelarm (102) aufweist, an dem der Betätigungsabschnitt (60) ausgebildet ist.

10. Parksperrenanordnung nach Anspruch 9, **dadurch gekennzeichnet, dass** die Welle (20) über einen Radsatz (78, 80) mit einem Drehglied (26) des Kraftfahrzeuggetriebes in Wirkverbindung steht, wobei die Parksperrenklinke (36) so in Bezug auf das Gehäuse (29) und die Welle (20) gelagert ist, dass ein Eingriff zwischen dem Klinkenzahn (40) und der Parksperrenverzahnung (34) im Bereich einer Verbindungslinie (82) zwischen einer Achse der Welle (20) und einer Achse des Drehgliedes (26) angeordnet ist.

## Claims

1. Parking mechanism arrangement (30) for a motor vehicle transmission (16) having
- a housing (29) and a shaft (20) supported so that it can rotate in relation to the housing (29),
- a parking mechanism gear (32) which is rotationally fixed to the shaft (20) and comprises a parking mechanism tooth system (34),
- a parking mechanism pawl (36) which is supported so that it can pivot about a pawl axis (38) in relation to the housing (29) and comprises a pawl tooth (40), which is capable of engaging in a tooth space (42) of the parking mechanism tooth system (34) in order to establish a locked position (SP),
- an actuating mechanism (46) which comprises an actuating element (48), which acts upon an actuating portion (60) of the parking mechanism pawl (36) in order to pivot the parking mechanism pawl (36) from a release position (FP) into the locked position (SP),
**characterized in that**
the actuating element (48) is embodied as a cam ring (48), which is arranged concentrically with the shaft (20) and which comprises a cam portion (58), which acts on the actuating portion (60) in order to establish the locked position (SP).

2. Parking mechanism arrangement (30) according to Claim 1, **characterized in that** the cam ring (48) is supported so that it can rotate in relation to the parking mechanism gear (32).

3. Parking mechanism arrangement according to Claim 1 or 2, **characterized in that** the parking mechanism gear (32) comprises an axially protruding shoulder portion (52), on the outer circumference (54) of which the cam ring (48) is supported.

4. Parking mechanism arrangement according to one of Claims 1-3, **characterized in that** a first end of a rod (62) of the actuating mechanism (46) is articulated with the cam ring (48).

5. Parking mechanism arrangement according to Claim 4, **characterized in that** a second end of the rod (62) is articulated with an actuating lever (90) of the actuating mechanism (46).

6. Parking mechanism arrangement according to one of Claims 1-5, **characterized in that** the cam ring (48) is connected to a locking element (72), which is designed to lock the parking mechanism pawl (36) in the release position (FP) when the cam ring (48) is in a release rotational position (FW).

7. Parking mechanism arrangement according to Claim 6, **characterized in that** the locking element (72) comprises an actuating portion (108), which is arranged in an axial direction between the cam ring (48) and the parking mechanism gear (32) and which comprises a locking portion (104) extending radially therefrom.

8. Parking mechanism arrangement according to one of Claims 1-7, **characterized in that** the parking mechanism pawl (36) comprises a first pawl portion (110) on which the pawl tooth (40) is formed, and a second pawl portion (112) on which the actuating portion (60) is formed, the first and the second pawl portions (110, 112) being offset in an axial direction.

9. Parking mechanism arrangement according to one of Claims 1-8, **characterized in that** the parking mechanism pawl (36) is embodied as a class 1 lever, which has a first lever arm (100) on which the pawl tooth (40) is formed, and a second lever arm (102) on which the actuating portion (60) is formed.

10. Parking mechanism arrangement according to Claim 9, **characterized in that** the shaft (20) is operatively connected by a geartrain (78, 80) to a rotational element (26) of the motor vehicle transmission, the parking mechanism pawl (36) being supported in relation to the housing (29) and the shaft (20) so that an engagement between the pawl tooth (40) and the parking mechanism tooth system (34) is located in the area of a connecting line (82) between an axis of the shaft (20) and an axis of the rotational element (26).

## Revendications

1. Agencement de frein de stationnement (30) pour une boîte de vitesses de véhicule automobile (16), comprenant
- un carter (29) et un arbre (20) monté rotatif par rapport au carter (29),
- une roue de frein de stationnement (32) qui est fixée de manière solidaire en rotation sur l'arbre (20) et comprend une denture de frein de stationnement (34),
- un cliquet de frein de stationnement (36) qui est monté de manière pivotante autour d'un axe de cliquet (38) par rapport au carter (29) et comprend une dent de cliquet (40) qui peut s'engrener dans un entredent (42) de la denture de frein de stationnement (34) pour produire une position de blocage (SP),
- un mécanisme d'actionnement (46) qui comprend un organe d'actionnement (48) qui agit sur une partie d'actionnement (60) du cliquet de frein de stationnement (36) afin de pivoter le cliquet de frein de stationnement (36) d'une position de libération (FP) dans la position de blocage (SP),
**caractérisé en ce que**
l'organe d'actionnement (48) est réalisé en tant qu'anneau à came (48) qui est disposé concentriquement à l'arbre (20) et qui comprend une partie came (58) qui agit sur la partie d'dactionnement (60) pour produire la position de blocage (SP).

2. Agencement de frein de stationnement (30) selon la revendication 1, **caractérisé en ce que** l'anneau à came (48) est monté rotatif par rapport à la roue de frein de stationnement (32).

3. Agencement de frein de stationnement selon la revendication 1 ou 2, **caractérisé en ce que** la roue de frein de stationnement (32) comprend une partie d'épaulement (52) faisant saillie axialement, sur la périphérie extérieure (54) de laquelle est monté l'anneau à came (48).

4. Agencement de frein de stationnement selon l'une des revendications 1 à 3, **caractérisé en ce qu'**une première extrémité d'une tige (62) du mécanisme d'actionnement (46) est reliée de manière articulée à l'anneau à came (48).

5. Agencement de frein de stationnement selon la revendication 4, **caractérisé en ce qu'**une deuxième extrémité de la tige (62) est reliée de manière articulée à un levier d'actionnement (90) du mécanisme d'actionnement (46).

6. Agencement de frein de stationnement selon l'une des revendications 1 à 5, **caractérisé en ce que** l'anneau à came (48) est relié à un organe de verrouillage (72) qui est conçu pour verrouiller le cliquet de frein de stationnement (36) dans la position de libération (FP) dans une position angulaire de libération (FW) de l'anneau à came (48).

7. Agencement de frein de stationnement selon la revendication 6, **caractérisé en ce que** l'organe de verrouillage (72) comprend une partie de fixation (108) qui est disposée dans la direction axiale entre l'anneau à came (48) et la roue de frein de stationnement (32), et comprend une partie de verrouillage (104) s'étendant radialement à partir de celle-ci.

8. Agencement de frein de stationnement selon l'une des revendications 1 à 7, **caractérisé en ce que** le cliquet de frein de stationnement (36) comprend une première partie de cliquet (110) sur laquelle la dent de cliquet (40) est formée, et une deuxième partie de cliquet (112) sur laquelle la partie d'actionnement (60) est formée, la première et la deuxième partie de cliquet (110, 112) étant décalées dans la direction axiale.

9. Agencement de frein de stationnement selon l'une des revendications 1 à 8, **caractérisé en ce que** le cliquet de frein de stationnement (36) est réalisé en tant que levier bilatéral qui comprend un premier bras de levier (100) sur lequel la dent de cliquet (40) est formée, et un deuxième bras de levier (102) sur lequel la partie d'actionnement (60) est formée.

10. Agencement de frein de stationnement selon la revendication 9, **caractérisé en ce que** l'arbre (20) est en liaison fonctionnelle, par le biais d'un train d'engrenages (78, 80), avec un organe rotatif (26) de la boîte de vitesses de véhicule automobile, le cliquet de frein de stationnement (36) étant monté par rapport au carter (29) et à l'arbre (20) de telle sorte qu'un engrènement entre la dent de cliquet (40) et la denture de frein de stationnement (34) soit situé dans la région d'une ligne de liaison (82) entre un axe de l'arbre (20) et un axe de l'organe rotatif (26).
